# EUROPEAN PATENT SPECIFICATION

(11) **EP 1 236 076 B1**
(45) Date of publication and mention of the grant of the patent: **27.10.2004**
(21) Application number: 00982044.0
(22) Date of filing: 01.12.2000
(51) Int. Cl.: G06F 3/00

(54) **A PORTABLE COMMUNICATION DEVICE AND METHOD**
Tragbare Kommunikationsvorrichtung und Verfahren
APPAREIL DE COMMUNICATION PORTATIF ET PROCEDE ASSOCIE

(30) Priority: 08.12.1999 SE 9904469
(43) Date of publication of application: 04.09.2002
(73) Proprietor: Telefonaktiebolaget LM Ericsson (publ), 164 83 Stockholm (SE)
(72) Inventor: LINGE, Anders, S-244 36 Kävlinge (SE)
(74) Representative: Ström, Tore
(86) International application number: PCT/SE2000/002403
(87) International publication number: WO 2001/042871

(56) References cited:
- EP-A1- 0 924 915
- WO-A-01/43063
- WO-A1-99/50818
- DE-A1- 19 508 320
- US-A- 3 909 785
- US-A- 4 853 494
- US-A- 5 451 723
- US-A- 5 625 354
- QUIKWRITING: 'Constinuous stylus-based text entry' KEN PERLIN, PUBL. UIST 98 CONFERENCE, [Online] November 1998, XP002951420 Retrieved from the Internet: <URL:http://www.mrl.nyu.edu/perlin/demos/qu ikwriting.html> [retrieved on 2000-07-13]
- MAYOL-CUEVAS W.W.: 'A first approach to tactile texture recognition' SYSTEMS, MAN AND CYBERNETICS, 1998 IEEE INTERNATIONAL CONFERENCE ON vol. 5, 11 October 1998 - 14 October 1998, pages 4246 - 4250, XP000888071

## Description

### Field of the Invention

The present invention relates to a portable communication device with a microphone, the device further comprising a processing device, which works as a controller, for receiving a hand-written message from a user and converting the message into digital data. Furthermore, the present invention relates to a method of detecting sound by the microphone and converting the sound into digital data.

### Description of the Prior Art

In a communication device according to the above, such as a mobile telephone, or a personal data organizer, the common way of entering information is by using a keyboard. The same key on the keyboard is often used to enter several letters, and by combining different keys and sequences different kind of messages can be entered.

Another solution is to use a touch screen as an input device. Text can be written by hand on the screen and the letters recognised using software, or the touch screen can be used for entering commands.

Viewing of a large screen in small equipment can be done by using a micro-display.

Another method of entering text into a stylus-based computer is disclosed in an On-line Quikwriting Applet (http://www.mrl.nyu.edu./perlin/demos/quikwriting.html),
developed by Ken Perlin, and published at the 11^{th} annual ACM symposium, UIST 98 conference in California, p. 215-216. This method uses a touch screen, and the display has a specific design that defines different areas for different characters. The characters are entered by moving a tip of an object in different sequences of movement on the display, wherein each sequence defines a respective character.

Yet another solution of entering messages into a device is disclosed in US-A-3909785, wherein a pad or data surface has several defined character regions, each region having several defined sectors corresponding to digital coordinates that define different characters to be entered. These are entered by a needle or pen that emits sound energy pulses. The sound energy pulses are continously detected, whereby the sectors being passed by the pen are identified and yield a respective character.

The main problem with the first mentioned solution is that the keyboard and the display are often very small. There are normally not enough keys for the whole alphabet, and several keys have to be pressed in order to input a single letter. The second solution with a touch screen on top of the display gives a lower contrast of the display and makes the display thicker and more expensive. Small displays also make it difficult to get a high resolution when a touch screen is being used with a portable device, and when using a micro-display a touch screen can not be used as input. The third solution uses an extended display, which increases the size and the cost for the device. The fourth solution involves a big unpractical display, and a specific pen or needle can only be used for entering characters, whereby the access to the device for another user without this specific pen is limited, and if the pen is forgotten the pad or data surface is useless.

Document WO 0143063 that is relevant in the sense of Article 54(3) EPC discloses an apparatus for cursor movement or text generation from touch events by detecting with several microphones random acoustic noise resulting from moving fingertip across a slightly roughened surface.

### Summary of the Invention

The object of the present invention is to provide a communication device with a possibility of entering hand-written messages easier and quicker.

This object is achieved by the device and method in the appended claims.

### Brief Description of the Drawings

The present invention will now be described in further detail, reference being made to the accompanying drawings, in which:
FIG 1 is a perspective view showing a communication device;
FIG 2 is a perspective view showing a communication device in a position, where information can be entered on a cover according to the invention;
FIG 3 is a front view showing a preferred embodiment of a surface on a cover according to the invention;
FIG 4 is a frontview showing a preferred embodiment of a surface on a cover according to the invention;
FIG 5 is a view in section showing a preferred embodiment of a pattern on a surface according to the invention;
FIG 6 is a view in section showing another preferred embodiment of a pattern on a cover according to the invention;
FIG 7 is a view in section showing yet another preferred embodiment of a pattern on a cover according to the invention;
FIG 8 is a view in section further showing another preferred embodiment of a pattern on a cover according to the invention; and
FIG 9 is a flow chart showing a method of detecting, recognising, converting and entering data according to the invention into a communication device.

### Detailed Description of the Invention

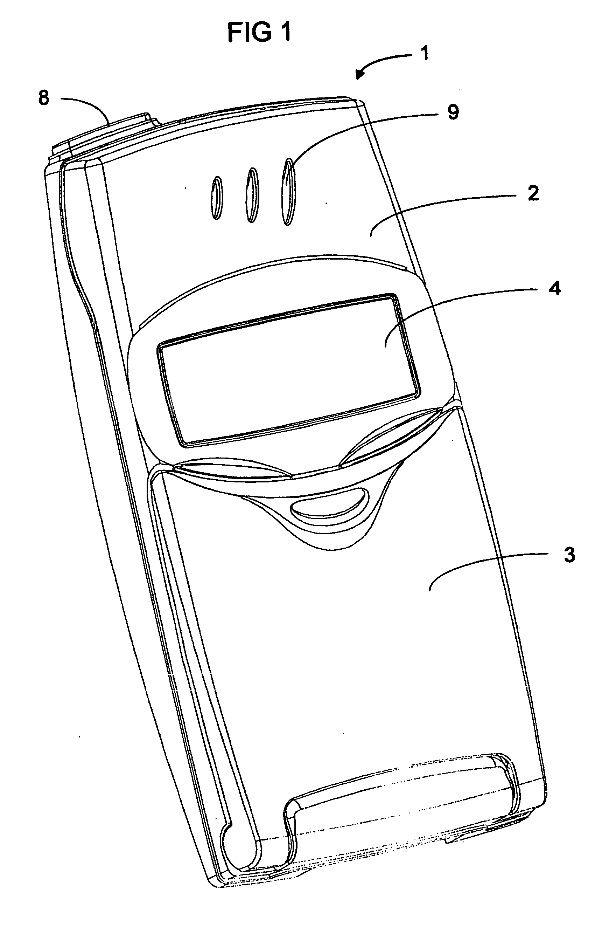

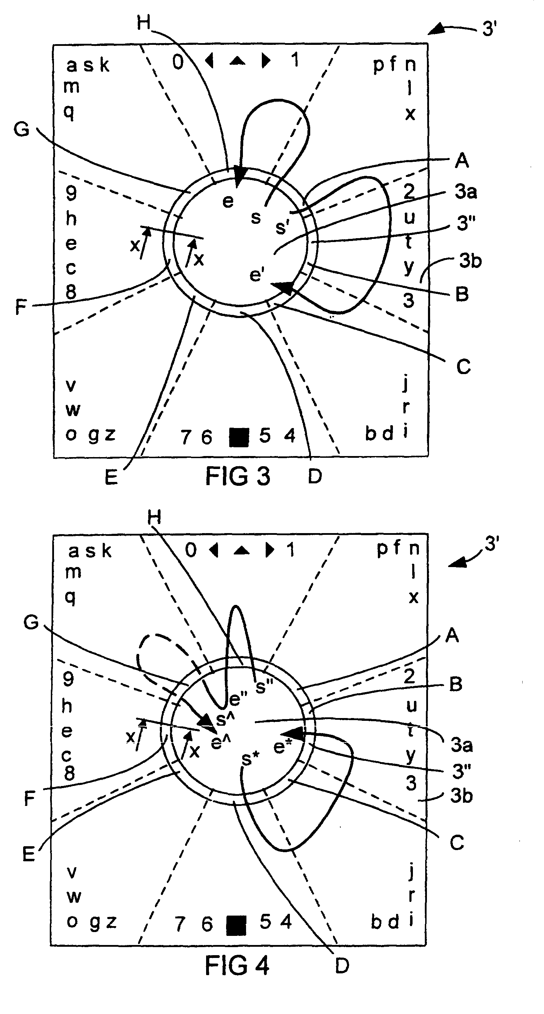

FIGS 1-2 illustrate a communication device 1 with a cover 3. FIGS 3-4 show two different embodiments of a surface 3' on the cover 3. Preferably, the communication device is a handheld device for entering messages into it or commands for controlling it, such as a mobile or cellular telephone. The device comprises a casing 2, the cover 3, a display 4, at least one microphone 5, a keypad 6, an antenna 8, loudspeaker openings 9, and a processing device, which is operatively connected to the display 4, the microphone 5 and the keypad 6. More than one microphone 5 could be used for a more accurate detection of sound and position of a tip 7 of a pen, a stylus, or a finger nail during handwriting.

The processing device comprises a controller (such as a central processing unit (CPU), a digital signal processor (DSP) or a programmable logic array (PLA)) together with a memory (such as an electrically erasable programmable read-only memory (EEPROM), a flash memory or similar means) and a set of program instructions stored in the memory and executable by the controller. Alternatively, the processing device could be realized solely in hardware, for instance as an application-specific integrated circuit (ASIC), discrete components or other components fulfilling the demands.

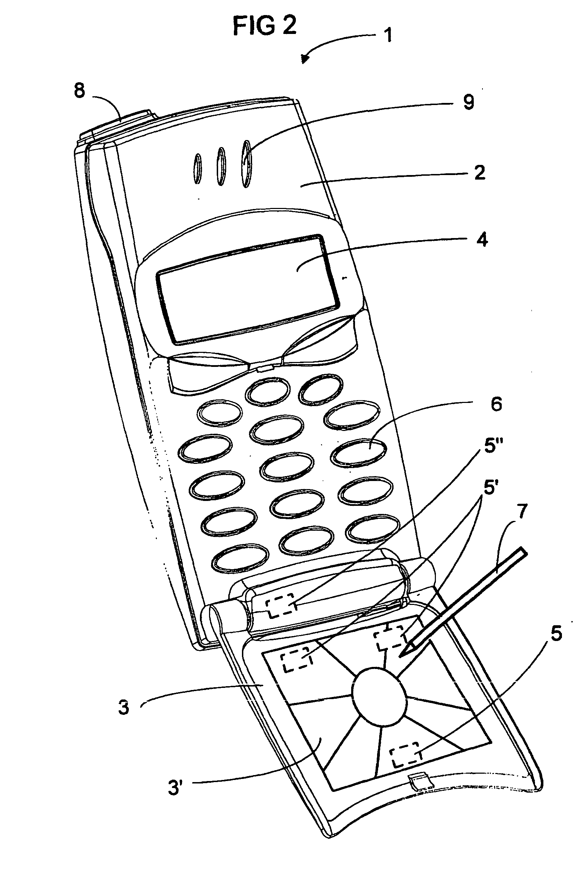

In FIGS 1 and 2, the communication device 1 has a movable flip or cover 3 for protecting the keypad 6 against damage and unintentional input. The cover 3 can be opened, thereby supporting a pen 7 or another object with a fairly sharp tip, such as a finger nail, when it is being used for handwriting on the communication device 1. The microphone 5 is preferably placed in the cover 3 close to a position where a user's mouth would be placed during use of a telephone mode, but can also be placed on the cover 3 at point 5', alone or with any number of microphones, closer to the communication device 1, or even in the casing 2 of the device 1 adjacent point 5", or in any other location in the device 1. This gives a more accurate detection of the sound due to a triangularity effect between several cooperating microphones instead of just one microphone.

The user can either use a pen 7 or another sharptipped object when writing by hand. The sound caused by the user during movement of the pen 7 against the cover 3 is registered by the microphone 5 and forwarded, in electric form, to the processing device. The sound, in electric form, is recognised by means of the processing device and suitable software. The sound is converted into digital data, representing e g a cursor movement or an entered text, and is forwarded to the display 4 of the communication device 1 by means of the processing device. The sound, in the form of digital data, can also be used as commands for executing desired functions and controlling the communication device 1. To facilitate the accuracy in registration of the sound, the cover 3 can be made slightly rugged and/or embossed in specific areas so that different patterns create different and distinct sounds, whereby the sound may be more easily recognised.

In FIG 3 a preferred embodiment of a surface 3' on the cover 3 is shown. The surface 3' is divided into several areas 3a, 3b, as shown in FIGS 3 and 4. The surface 3' consists of at least one area 3a in the centre and at least one outer sub area 3b surrounding the centre area 3a. The sub areas 3a and 3b are intended to define which characters to be entered when writing a message by hand. This is done by arranging a specific sub pattern 3" for each sub area 3b between the centre area 3a and its adherent sub area 3b. This means that a respective character, corresponding to each sub area 3b and its sub pattern 3", is entered by moving a tip 7 of a fairly sharp object twice over the sub pattern 3" in two different directions. The surface 3' could also be arranged on any other separate substantially planar surface, that is operatively connected to the processing device of the communication device 1, such as e g a separate pad, a table or any other handheld device for entering text or commands.

The most important when entering a hand-written message into the device 1 is that the movement of the tip 7 has to start and end in the centre area 3a. The passing of the different sub patterns 3" defines the desired character to be entered into the communication device 1 due to the specific sound caused when the tip 7, in contact with the surface 3', passes over a respective sub pattern 3". The start movement out of the centre area 3a past the specific sub pattern 3", and into the first outer sub area 3b, defines from which group of characters a desired character to be entered is chosen. The second movement from the first sub area 3b to another sub area, and past its sub pattern 3" back into the centre area 3a, defines the position of the desired character to be entered from the chosen group of characters. This means that a character can be entered in one continous movement without lifting the tip 7.

The tip 7 can be moved with different velocity and pressed against the surface 3' with various force by different users. The tip 7 can also be made of different materials, i e harder or softer. The processing device has an optional function, that can recognise the sound, and forwards the right information independent of what kind of tip 7 being used or with which force the user presses the tip 7 against the surface 3'. This function is a teaching mode, which is entered by pressing a key 6. The teaching of the processing device is done, after initiating this mode, by a movement of the tip 7 against a specific sub pattern 3" on the surface 3'. The sound created by this movement over the specific sub pattern 3" is detected, registered, and stored for later use as reference sound.

If a character to be entered can not be found in any of the sub areas 3b, other groups of characters can be chosen by moving the tip 7 in and out from the centre area 3a, i e back and forth over one or two specific sub patterns 3", or by tapping one or more times on the cover 3, or alternatively by pressing a key on the keypad 6. This change of character groups can be done by using the processing device for recognition of the sound caused by movement or tapping on the surface, or for recognition of the pressing of keys. The change can be indicated by a symbol or symbols on the display 4 of the device 1 and may show which group of characters are going to be used for entering the desired information. Any sub pattern can be defined to control the change between different character groups by means of symbols on the surface of the cover 3, and these symbols can also be presented simultaneously on the display 4 of the communication device 1.

These symbols can be designed in many ways, e g as circles, squares, triangles, stars, punctuation marks, or have any other form and can be defined to have different functions, e g changing the selectable character groups from capital letters to small letters, or to figures, or alternatively to parentheses, or for executing different commands. A preferred group of symbols is a square initiating a stop, a circle, a triangle pointing upwards initiating activation of a mode for entering upper cases or lower cases, a triangle pointing to the right for entering space, and a third triangle pointing to the left for deleting the last written character.

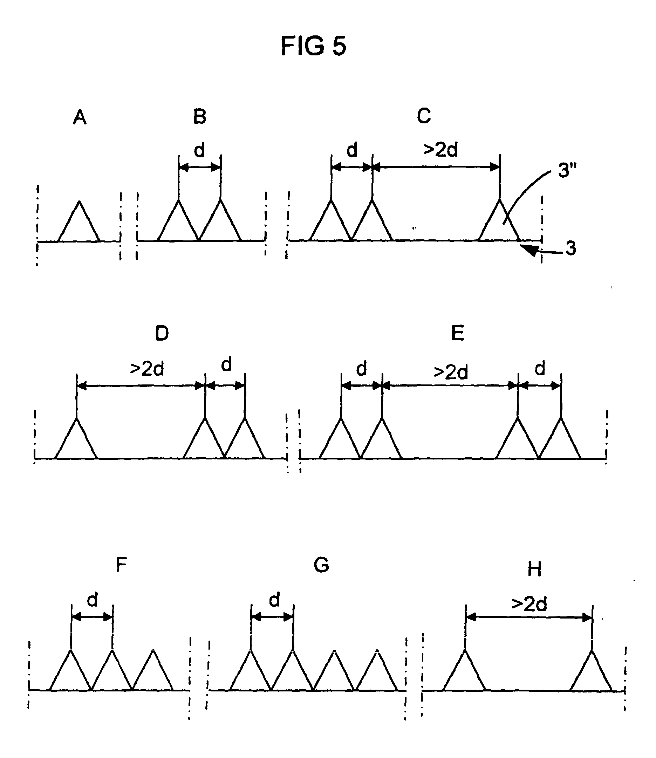

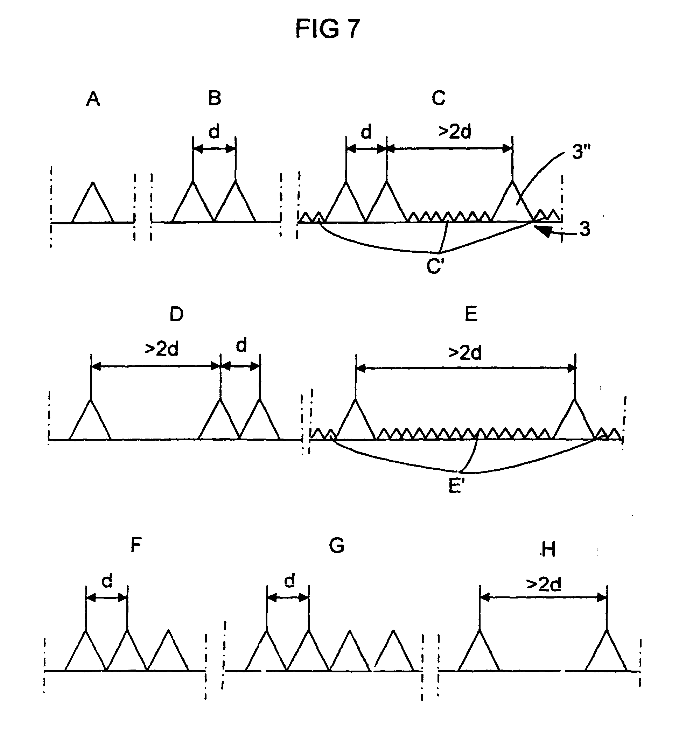

Preferably, as shown in FIGS 3 and 4, the surface 3' has eight outer sub areas 3b. Each sub area 3b has a sub pattern 3", which consists of at least one groove or rib for creating a specific sound when the tip 7 passes over it. This sound has to be unique for each sub area 3b, whereby each of the sub patterns 3" has a different pattern consisting of a different number of grooves or ribs arranged in different combinations with different mutual distances, preferably eight different patterns of ribs A, B, C, D, E, F, G and H, shown in more detail in FIGS 5, 6, 7 and 8. Each of the sub areas 3b may also have a surface that is rugged, i e a surface with a lot of very small grooves or ribs, similar to the small ribs shown in FIG 7 as pattern C' and E' of the patterns C and E, which are smaller than said sub patterns 3", for creating a basic sound when the tip 7 in contact with the sub areas 3b moves over them. This basic sound facilitates the sound recognition by means of a more exact detecting of the position of the tip 7. The centre area 3a should be as smooth as possible in relation to the sub areas 3b for the same reason.

A sequence of movements is shown for clarity reasons in the form of bold lines on the surface 3' for entering a character. The movement starts in the centre area 3a at point s, the sub pattern A is then passed by the tip 7 and defines from which group the desired character, e g the small letter f, is going to be chosen. Then the tip 7 is moved from the first sub area, after passing the sub pattern A, into the second sub area, and past the second sub pattern H back into the centre area 3a at position e. The second sub pattern H defines the position of the small letter f in the chosen group, i e in the second position in the upper row in the first sub area 3b. Another character is entered by moving the tip 7 in a different sequence, e g the lower-case character x is entered by moving the tip 7 from the centre area 3a at point s', past sub pattern A into the sub area in the upper right hand corner of surface 3', and into a second sub area followed by a third sub area 3b located in the lower right hand corner of surface 3', and back into the centre area 3a at point e' past sub pattern C.

Another sequence of movements is shown in FIG 4 in the form of bold lines on the surface 3' for entering another character. The first movement from position s" in the centre area 3a past sub pattern H into the first sub area defines a change of character group. The movement from this first sub area, past the sub pattern H once more, back into the centre area 3a at position e", defines a change from lower-case letters to capital letters, and wherein the symbol in the middle of the three symbols above sub pattern H is activated. The subsequent "second start" movement from the sub area 3a at position s^, past sub pattern G and into sub area 3b, defines from which character group the character is going to be chosen. The movement from this sub area back into the centre area 3a at position e^, past the sub pattern G once more, defines the middle position in the upper row for letter A. If the character number 4 is going to be entered after capital A above, the tip 7 is moved from point s* in the centre area 3a, past sub pattern D into the lower middle sub area, this defines a change of character group. The movement from this first sub area past the next adjacent sub area at the lower right-hand corner and into the right-hand middle sub area, past sub pattern C back into the centre area 3a at point e*, defines the position of the number 4, i e two steps from the middle square symbol in the first chosen character group in the lower sub area.

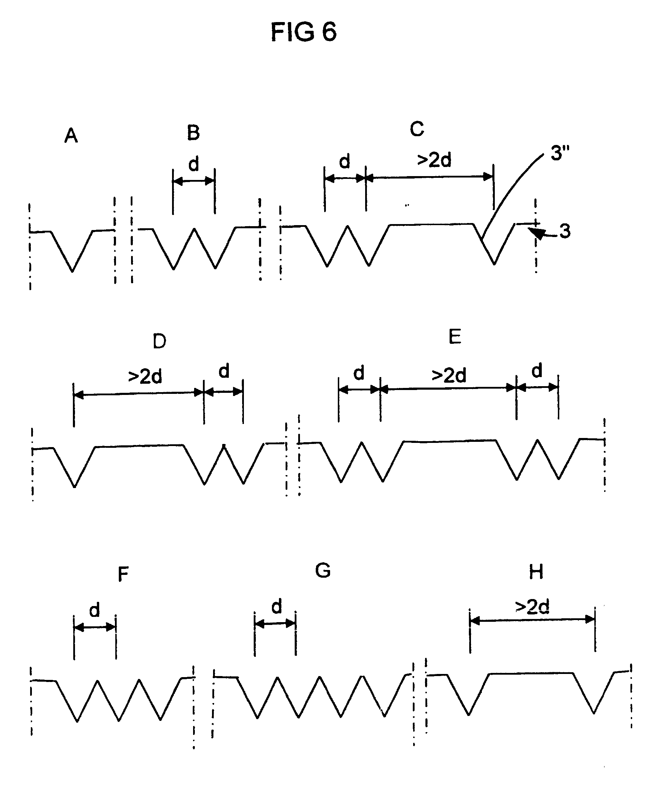

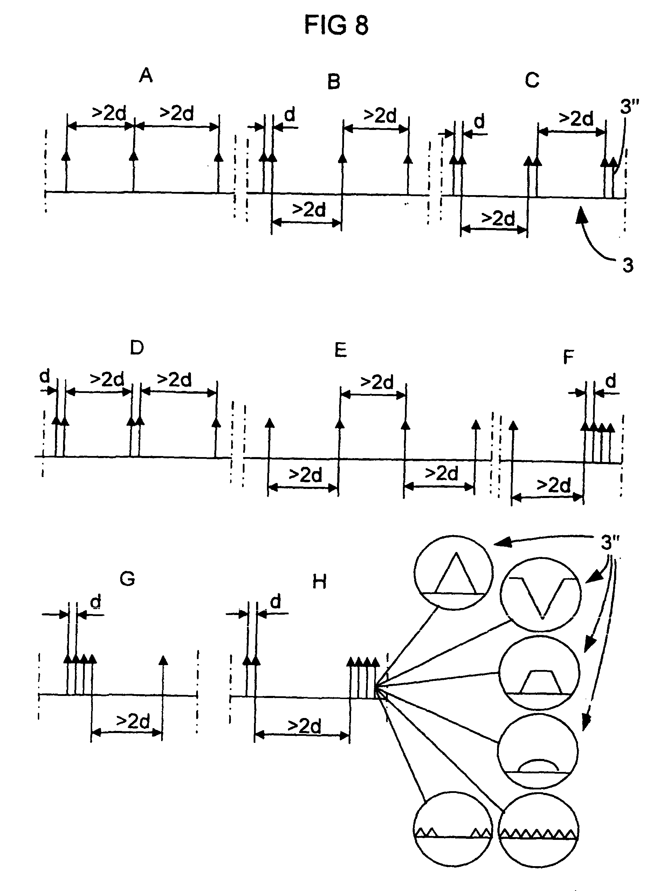

FIG 5 shows a preferred embodiment of a pattern 3" with eight sub patterns A, B, C, D, E, F, G, H with different combinations of ribs, wherein each sub pattern can be combined with any sub area 3b. The illustration in section is done with reference to only one sub pattern F along line x-x in FIG 3 and 4. Other designs of the pattern instead of ribs can be used, such as grooves or any other form, as shown in FIG 6. The ribs can also be round, flat or have any other design, as shown in an enlarged scale in FIG 8. The ribs can also have different sizes, creating sounds with higher frequencies, as shown by sub pattern C' and E' in FIG 7. The different sub patterns in FIG 5 will be explained in the form of combinations of straight arrows (↑) pointing upwards. Sub pattern A consists of one rib (↑), whereas sub pattern B consists of two ribs (↑↑) with a mutual distance d. Sub pattern C has three ribs, wherein a pair of ribs have a mutual distance d and the third rib is arranged a distance more than 2d from the first pair (↑↑ ↑). Sub pattern D also includes three ribs, where one rib is placed adjacent the centre area 3a and the other two ribs are placed a distance more than 2d from the first rib (↑ ↑↑). Sub pattern E comprises four ribs with two pair of ribs with a mutual distance d placed a distance more than 2d from each other (↑↑ ↑↑). Sub pattern F consists of three ribs with a mutual distance d (↑↑↑). Sub pattern G has four ribs with a mutual distance d (↑↑↑↑), and sub pattern H consists of two ribs with a mutual distance more than 2d from each other (↑ ↑).

FIG 6 shows a preferred embodiment of a pattern 3" with eight sub patterns A, B, C, D, E, F, G, H with different combinations of grooves instead of ribs as in FIG 5. The illustration in section is done with reference to only one sub pattern F along line x-x in FIG 3 and 4. The mutual distances between the grooves are the same as in FIG 5. The grooves can have any other design and size, such as a more shallow and/or wider form, or have a more rounded bottom.

FIG 7 shows another preferred embodiment of a pattern 3" with eight sub patterns A, B, C, D, E, F, G, H with different combinations of ribs as in FIG 5. The illustration in section is done with reference to only one sub pattern F along line x-x in FIG 3 and 4. Distances and sizes of the ribs are the same as all the patterns 3" in FIG 5 except for sub pattern E and C. Sub pattern C has three ribs, wherein a pair of ribs have a mutual distance d and a third rib is arranged a distance more than 2d from the first pair. The area between the single rib and the pair of ribs is equipped with several small ribs similar to the basic pattern in the sub areas 3b for creating a kind of basic sound (↑↑ ↑). Sub pattern E comprises two bigger ribs with a mutual distance d placed a distance more than 2d from each other. The area between the pair of ribs has several small ribs creating a pattern similar to the basic pattern in the sub areas 3b (↑↑ ↑↑).

FIG 8 shows yet another preferred embodiment of a sub pattern 3" with eight sub patterns A, B, C, D, E, F, G, H as in FIG 5, 6 and 7. The sub patterns will be explained with the help of the same arrows (↑) as in the above description of FIG 5. The sub patterns are illustrated as arrows (↑) in FIG 8 for simplicity reasons. The sub patterns are shown with reference to only one sub pattern F along line x-x in FIG 3 and 4. Sub pattern A has three ribs with a mutual distance of more than 2d from each other (↑ ↑ ↑). Sub pattern B has four ribs consisting of a pair of ribs with a mutual distance d and two other ribs with a distance of more than 2d from each other and the first pair (↑↑ ↑ ↑). Sub pattern C includes three pair of ribs, i e a total of six ribs, with mutual distance of more than 2d between each pair, wherein the arrows in each pair have a mutual distance d (↑↑ ↑↑ ↑↑). Sub pattern D has five ribs (↑↑ ↑↑ ↑). Sub pattern E includes four ribs with a mutual distance of more than 2d (↑ ↑ ↑ ↑). Sub pattern F has five ribs but in another combination with one rib placed a distance more than 2d from the other four ribs with a mutual distance d (↑ ↑↑↑↑). Sub pattern G consists of five ribs in a combination similar to F (↑↑↑↑ ↑). Sub pattern H has six ribs with a first pair of ribs with a mutual distance d placed a distance more than 2d from the other four ribs with a mutual distance d (↑↑ ↑↑↑↑). FIG 8 also shows six enlargements disclosing different designs and combinations of ribs or grooves that may be used.

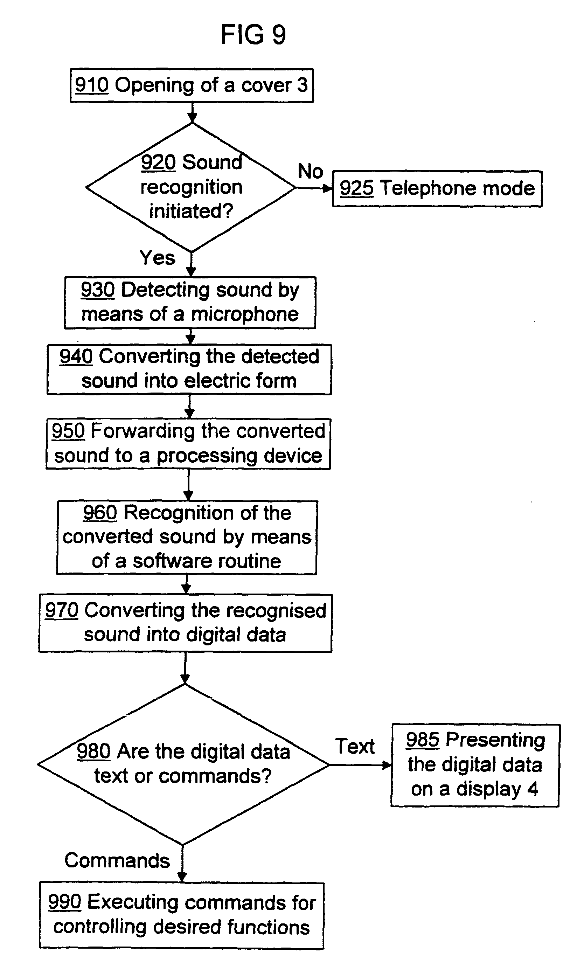

In the preferred embodiment of the cover 3, shown in FIG 2, the cover 3 is used for entering a handwritten message, moving a cursor on the display 4 or executing commands for controlling the device 1. This can be accomplished by the following steps shown in FIG 9.

The first step 910 involves opening of the cover 3 followed by a registration in step 920 of whether the telephone mode is to be used alone, step 925, or in combination with sound recognition in step 930. If sound recognition of handwriting on the cover 3 is going to be used, then one tap with the pen 7 in the middle of the cover 3 or pressing of a key on the keypad 6 has to be done to initiate the sound recognition function. In the next step the tip 7 is moved on the surface 3' of the cover 3, thereby creating a sound that is detected in step 930 by means of a microphone 5, converted into electric form in a step 940, forwarded to the processing device in a step 950, and recognised with suitable software in a step 960. The recognised information is then converted into digital data by means of the processing device, shown in a step 970, and recognised as text or commands in a step 980. If the digital data is intended for moving a cursor or entering text, it is forwarded to the display 4 as in step 985, or, alternatively, if the digital data is a command, it is executed for controlling a specific function in the communication device 1 in the last step 990. Functionality like a mouse can be achieved by combining the sound with one or more keys on the keypad 6.

The present invention has been described above with reference to a few embodiments, but this description is not intended to be a limitation of the invention. Embodiments other than the ones explicitly disclosed are equally possible within the scope of the invention, as defined by the appended independent claims.

## Claims

1. A portable communication device (1) having a microphone (5) and an processing device for receiving a handwritten message from a user and converting the message into digital data, **characterized in that** the processing device is operatively connected to the microphone (5), so that different sounds caused by movement of an object in contact with a surface of the communication device over different patterns or textures on the surface (3') of the communication device (1) when the user is hand-writing on said surface (3') may be acoustically detected by the microphone (5) and forwarded, in electric form, to the processing device, and having means in the processing device for executing (960) a software routine for recognising the sound, means for converting (970) the recognised sound into digital data, means for recognising (980) the digital data as text or commands, and means for forwarding (985) the digital data to a display (4) of the communication device (1) if the digital data represents text, and if the digital data represents commands, using the sound, in the form of digital data, for executing commands (990) that control desired functions in the communication device (1).

2. A device according to claim 1, wherein the movement of e.g. a pen (7) or stylus over different combinations of said patterns or textures on the surface (3') corresponds to different text inputs or commands.

3. A device according to claim 2, wherein the surface (3') is divided into several sub areas and specific sub patterns (3") for creating specific sounds when e.g, the pen (7) or the stylus in contact with the surface (3') moves against these sub patterns (3").

4. A device according to claim 3, wherein the surface (3') consists of at least one centre area (3a) surrounded by at least one outer sub area (3b) with adherent sub pattern (3").

5. A device according to claim 4, wherein the surface (3') consists of one centre area (3a) surrounded by at least two, preferably eight, sub areas (3b), whereby each sub area (3b) has an adherent sub pattern (3") arranged between the centre area (3a) and respective sub area (3b).

6. A device according to claim 5, wherein the surface (3') has multiple sets of character groups, preferably more than two sets, for each sub area (3b) comprising different combinations of small and capital letters, figures, punctuation marks, or any other characters that are needed for writing a message.

7. A device according to claim 6, wherein the surface (3') comprises more than one combination of sub patterns (3"), preferably one combination for each sub area (3b), each of the sub patterns consisting of ribs or grooves of different sizes, preferably ribs, which are arranged in different numbers and with different mutual distances creating a specific pattern, that causes a specific sound for each sub pattern when being passed by e.g, a tip of a pen (7) or any other stylus.

8. A device according to claim 7, wherein the surface (3') is placed on a cover (3) of the communication device (1), or on any other separate substantially planar surface of an external accessory, which is operatively connected to the processing device of the communication device (1), such as a separate pad, a table surface, or a portable device for entering text or commands.

9. A device according to any preceding claim, wherein the processing device comprises: at least one of a central processing unit (CPU), a digital signal processor (DSP) or a programmable logic array (PLA); together with a memory, such as an electrically erasable programmable read-only memory (EEPROM), a flash memory or similar means; and a set of program instructions stored in the memory and executable by the controller.

10. A device according to any preceding claim, wherein the communication device (1) is a portable device for entering text or commands into it, preferably a mobile or cellular telephone.

11. A method of detecting, recognising, converting and entering data into a communication device (1) such as a mobile phone, **characterized by the steps of**
detecting (930) different sounds, caused by movement of an object in contact with a surface of the communication device over different patterns or textures on the surface (3') of the communication device (1) when the user is hand-writing on said surface (3'), with a microphone (5),
converting (940) the sound into electric form by means of the microphone (5),
forwarding (950) the sound, in electric form, to an processing device of the communication device (1),
executing (960), in the processing device, a software routine for recognising the sound,
converting (970), in the processing device, the recognised sound into digital data, recognizing (980) the digital data as text or commands if the digital data represents text and
forwarding (985) the digital data to a display (4) of the communication device (1), and if the digital data represents commands using the sound, in the form of digital data, for executing commands (990) that control desired functions in the communication device (1).

## Patentansprüche

1. Tragbare Kommunikationseinrichtung (1) mit einem Mikrophon (5) und einer Verarbeitungseinrichtung zum Empfangen einer handgeschriebenen Nachricht eines Benutzers, und zum Umwandeln der Nachricht in digitale Daten, **dadurch gekennzeichnet, dass** die Verarbeitungseinrichtung mit dem Mikrophon (5) in Wirkverbindung steht, so dass verschiedene Geräusche, die durch Bewegung eines Gegenstands, der eine Oberfläche der Kommunikationseinrichtung berührt, über verschiedene Muster oder Strukturen auf der Oberfläche (3') der Kommunikationseinrichtung (1) verursacht werden, wenn der Benutzer mit der Hand auf der Oberfläche (3') schreibt, akustisch durch das Mikrophon (5) erfasst, und in elektrischer Form an die Verarbeitungseinrichtung übermittelt werden können, und die in der Verarbeitungseinrichtung Mittel zum Ausführen (960) einer Softwareroutine zum Erkennen des Geräuschs, Mittel zum Umwandeln (970) des erkannten Geräuschs in digitale Daten, Mittel zum Erkennen (980) der digitalen Daten als Text oder Befehle, und Mittel zum Übermitteln (985) der digitalen Daten an eine Anzeige (4) der Kommunikationseinrichtung (1) aufweist, wenn die digitalen Daten Text bedeuten, und wenn die digitalen Daten Befehle bedeuten, die das Geräusch in Form von digitalen Daten benutzen, um Befehle (990) auszuführen, die gewünschte Funktionen in der Kommunikationseinrichtung (1) steuern.

2. Einrichtung nach Anspruch 1, wobei die Bewegung z.B. eines Stifts (7) oder Griffels über verschiedenen Kombinationen der Muster oder Strukturen auf der Oberfläche (3') verschiedenen Texteingaben oder Befehlen entspricht.

3. Einrichtung nach Anspruch 2, wobei die Oberfläche (3') in mehrere Unterbereiche und spezielle Untermuster (3") zum Erzeugen spezieller Geräusche eingeteilt ist, wenn z.B. der Stift (7) oder der Griffel, der die Oberfläche (3') berührt, sich gegen diese Untermuster (3") bewegt.

4. Einrichtung nach Anspruch 3, wobei die Oberfläche (3') mindestens einen mittleren Bereich (3a) enthält, der von mindestens einem äußeren Unterbereich (3b) mit einem verbundenen Untermuster (3") umgeben ist.

5. Einrichtung nach Anspruch 4, wobei die Oberfläche (3') einen mittleren Bereich (3a) enthält, der von mindestens zwei, vorzugsweise acht Unterbereichen (3b) umgeben ist, wobei jeder Unterbereich (3b) ein verbundenes Untermuster (3") aufweist, das zwischen dem mittleren Bereich (3a) und dem entsprechenden Unterbereich (3b) angeordnet ist.

6. Einrichtung nach Anspruch 5, wobei die Oberfläche (3') mehrere Sätze von Schriftzeichen-Gruppen, vorzugsweise mehr als zwei Sätze für jeden Unterbereich (3b) aufweist, die verschiedene Kombinationen von Klein- und Großbuchstaben, Symbolen, Interpunktionszeichen oder irgendwelche andere Schriftzeichen umfasst, die benötigt werden, um eine Nachricht zu schreiben.

7. Einrichtung nach Anspruch 6, wobei die Oberfläche (3') mehr als eine Kombination von Untermustern (3"), vorzugsweise eine Kombination für jeden Unterbereich (3b) umfasst, wobei jedes der Untermuster Rippen oder Rillen verschiedener Größen enthält, vorzugsweise Rippen, die in verschiedener Anzahl und mit verschiedenen gegenseitigen Abständen angeordnet sind, die ein spezielles Geräusch für jeden Unterbereich verursachen, wenn sie von z.B. einer Spitze eines Stifts (7) oder irgendeines anderen Griffels passiert werden.

8. Einrichtung nach Anspruch 7, wobei die Oberfläche (3') auf einer Abdeckung (3) der Kommunikationseinrichtung (1) angebracht ist, oder auf irgendeiner anderen getrennten im Wesentlichen ebenen Oberfläche eines externen Zubehörs, das mit der Verarbeitungseinrichtung der Kommunikationseinrichtung (1) in Wirkverbindung steht, wie einer getrennten Unterlage, einer Tafeloberfläche, oder einer tragbaren Einrichtung zum Eingeben von Text oder Befehlen.

9. Einrichtung nach einem der vorhergehenden Ansprüche, wobei die Verarbeitungseinrichtung umfasst: mindestens eine zentrale Verarbeitungseinheit (CPU) , einen digitalen Signalprozessor (DSP) oder ein programmierbares logisches Array (PLA); zusammen mit einem Speicher, wie einem elektrisch löschbaren programmierbaren Festwertspeicher (EEPROM), einem Flash-Speicher oder ähnlichem; und einen Satz von Programmanweisungen, die in dem Speicher gespeichert sind, und durch den Controller ausführbar sind.

10. Einrichtung nach einem der vorhergehenden Ansprüche, wobei die Kommunikationseinrichtung (1) eine tragbare Einrichtung zum Eingeben von Text oder Befehlen in diese ist, vorzugsweise ein Mobilfunk- oder zellulares Telefon.

11. Verfahren zum Erfassen, Erkennen, Umwandeln und Eingeben von Daten in eine Kommunikationseinrichtung (1), wie ein Mobilfunktelefon, **gekennzeichnet durch** die Schritte
Erfassen (930) von verschiedenen Geräuschen, die von. einer Bewegung eines Gegenstands, der eine Oberfläche der Kommunikationseinrichtung berührt, über verschiedene Muster oder Strukturen auf der Oberfläche (3') der Kommunikationseinrichtung (1) verursacht werden, wenn der Benutzer mit der Hand auf der Oberfläche (3') schreibt, mit einem Mikrophon (5),
Umwandeln (940) des Geräuschs in elektrische Form mit Hilfe des Mikrophons (5),
Übermitteln (950) des Geräuschs in elektrische Form an eine Verarbeitungseinrichtung der Kommunikationseinrichtung (1),
Ausführen (960) einer Softwareroutine zum Erkennen des Geräuschs in der Verarbeitungseinrichtung,
Umwandeln (970) des erkannten Geräuschs in digitale Daten in der Verarbeitungseinrichtung,
Erkennen (980) der digitalen Daten als Text oder Befehle, und wenn die digitalen Daten Text bedeuten,
Übermitteln (985) der digitalen Daten an eine Anzeige (4) der Kommunikationseinrichtung (1), und wenn die digitalen Daten Befehle bedeuten, Verwenden des Geräuschs in Form von digitalen Daten zum Ausführen von Befehlen (990), die gewünschte Funktionen in der Kommunikationseinrichtung (1) steuern.

## Revendications

1. Dispositif de communication portable (1) ayant un microphone (5) et un dispositif de traitement pour recevoir un message écrit manuellement provenant d'un utilisateur, et pour convertir le message en données numériques, **caractérisé en ce que** le dispositif de traitement est connecté fonctionnellement au microphone (5), de façon que différents sons occasionnés par le mouvement d'un objet en contact avec une surface du dispositif de communication sur différents motifs ou textures sur la surface (3') du dispositif de communication (1) lorsque l'utilisateur écrit à la main sur ladite surface (3') puissent être détectés de façon acoustique par le microphone (5) et transmis, sous forme électrique, au dispositif de traitement, et ayant un moyen dans le dispositif de traitement pour exécuter (960) une procédure logicielle pour reconnaître le son, un moyen pour convertir (970) en données numériques le son reconnu, un moyen pour reconnaître (980) les données numériques comme du texte ou des ordres, et un moyen pour transmettre (985) les données numériques à un élément de visualisation (4) du dispositif de communication (1) si les données numériques représentent du texte, et pour utiliser le son, sous la forme de données numériques, si les données numériques représentent des ordres, pour exécuter des ordres (990) qui commandent des fonctions désirées dans le dispositif de communication (1).

2. Dispositif selon la revendication 1, dans lequel le mouvement, par exemple d'un crayon (7) ou d'un stylet sur différentes combinaisons des motifs ou des textures sur la surface (3') correspond à différents ordres ou entrées de texte.

3. Dispositif selon la revendication 2, dans lequel la surface (3') est divisée en plusieurs sous-zones et en sous-motifs spécifiques (3") pour créer des sons spécifiques, par exemple lorsque le crayon (7) ou le stylet en contact avec la surface (3') se déplace contre ces sous-motifs (3").

4. Dispositif selon la revendication 3, dans lequel la surface (3') consiste en au moins une zone centrale (3a) entourée par au moins une sous-zone extérieure (3b) avec un sous-motif (3") adhérent.

5. Dispositif selon la revendication 4, dans lequel la surface (3') consiste en une zone centrale (3a) entourée par au moins deux, de préférence huit, sous-zones (3b), chaque sous-zone (3b) ayant un sous-motif adhérent (3") disposé entre la zone centrale (3a) et la sous-zone (3b) respective.

6. Dispositif selon la revendication 5, dans lequel la surface (3') a de multiples ensembles de groupes de caractères, de préférence plus de deux ensembles, pour chaque sous-zone (3b), comprenant différentes combinaisons de lettres minuscules et majuscules, de chiffres, de marques de ponctuation, ou n'importe quels autres caractères qui sont nécessaires pour écrire un message.

7. Dispositif selon la revendication 6, dans lequel la surface (3') comprend plus d'une combinaison de sous-motifs (3"), de préférence une combinaison pour chaque sous-zone (3b), chacun des sous-motifs consistant en arêtes ou en sillons de différentes tailles, de préférence des arêtes, qui sont disposés en différents nombres et avec différentes distances mutuelles créant un motif spécifique, qui produit un son spécifique pour chaque sous-motif lorsque par exemple une pointe d'un crayon (7) ou tout autre stylet passe sur ce sous-motif.

8. Dispositif selon la revendication 7, dans lequel la surface (3') est placée sur une façade (3) du dispositif de communication (1), ou sur toute autre surface séparée, pratiquement plane, d'un accessoire externe, qui est connecté fonctionnellement au dispositif de traitement du dispositif de communication (1), tel qu'une tablette séparée, une surface de table, ou un dispositif portable pour l'entrée de texte ou d'ordres.

9. Dispositif selon l'une quelconque des revendications précédentes, dans lequel le dispositif de traitement comprend : l'un au moins d'une unité centrale de traitement (UC), d'un processeur de signal numérique (DSP) ou d'un réseau logique programmable (PLA); conjointement à une mémoire, telle qu'une mémoire morte programmable et effaçable de façon électrique (EEPROM), une mémoire flash ou un moyen similaire; et un ensemble d'instructions de programme stockées dans la mémoire et exécutables par l'unité de commande.

10. Dispositif selon l'une quelconque des revendications précédentes, dans lequel le dispositif de communication (1) est un dispositif portable permettant d'introduire dans celui-ci du texte ou des ordres, de préférence un téléphone mobile ou cellulaire.

11. Procédé de détection, de reconnaissance, de conversion et d'entrée de données dans un dispositif de communication (1) tel qu'un téléphone mobile, **caractérisé par** les étapes suivantes :
on détecte (930) avec un microphone (5) différents sons, occasionnés par un mouvement d'un objet en contact avec une surface du dispositif de communication, sur différents motifs ou textures sur la surface (3') du dispositif de communication (1), lorsque l'utilisateur écrit à la main sur ladite surface (3'),
on convertit (940) le son sous forme électrique au moyen du microphone (5),
on transmet (950) le son, sous forme électrique, à un dispositif de traitement du dispositif de communication (1),
on exécute (960), dans le dispositif de traitement, une procédure logicielle pour reconnaître le son,
on convertit (970) le son reconnu en données numériques, dans le dispositif de traitement,
on reconnaît(980) les données numériques en tant que texte ou ordres, et si les données numériques représentent du texte,
on transmet (985) les données numériques à un élément de visualisation (4) du dispositif de communication (1), et si les données numériques représentent des ordres, on utilise le son, sous la forme de données numériques, pour exécuter des ordres (990) qui commandent des fonctions désirées dans le dispositif de communication (1).
